# EUROPEAN PATENT APPLICATION

(11) **EP 4 748 718 A1**
(43) Date of publication of application: **27.05.2026**
(21) Application number: 24845983.6
(22) Date of filing: 22.07.2024
(51) Int. Cl.: B64F 1/22, E04H 6/44

(54) **ELEVATOR SYSTEM**

(30) Priority: 21.07.2023 KR 20230095391; 19.07.2024 KR 20240095626; 19.07.2024 KR 20240095627
(71) Applicant: Hyundai Elevator Co., Ltd., Chungju-si, Chungcheongbuk-do 27329 (KR)
(72) Inventor: KIM, Hyun Goo, Chungju-si Chungcheongbuk-do 27329 (KR); SONG, Joon Hyun, Chungju-si Chungcheongbuk-do 27329 (KR)
(74) Representative: Baldus, Oliver
(86) International application number: PCT/KR2024/010558
(87) International publication number: WO 2025/023681

(57) **Abstract**

An elevator system according to one embodiment of the present invention includes an elevator car; a drive module including a drive motor providing driving force to lift or lower the elevator car, a rope moved by the drive motor, and a sheave part supporting the rope; a rope end part to which an end of the rope is coupled; and a counterweight supported by the rope, wherein the elevator car is connected to one side of the rope and the counterweight is connected to the other side of the rope to be supported thereby, a machine room receiving the rope end part and the drive motor therein is disposed below a rooftop, and the sheave part includes a car sheave coupled to the elevator car, the rope being supported on the car sheave.

## Description

### [Technical Field]

The present invention relates to an elevator system associated with urban air mobility (UAM) and vertical takeoff and landing airfields (vertiport).

### [Background Art]

There is growing demand for reduction of exhaust emissions to prevent global warming. Development of new technologies and innovations in the transportation sector are required to reduce emissions from ground transportation, which accounts for about 16% of carbon dioxide emissions.

Urban air mobility is currently emerging as an alternative to ground transportation, enabling rapid transportation of passengers and cargo by air within urban centers.

It is expected that urban air mobility will reduce congestion and relieve environmental problems in urban centers due to use of electricity, and the market for urban air mobility is growing rapidly.

A vertiport, which is an airport for take-off and landing of urban air mobility aircraft, may include a take-off area, a landing area, and a hangar. UAM aircraft can take off from or land at a vertiport. Due to structural features of the vertiport, the vertiport may have a hangar on each floor and the UAM aircraft may be parked in the hangar.

As a result, the vertiport requires an elevator to move the UAM aircraft in the vertical direction.

Furthermore, the takeoff and landing areas may be located on the rooftop of the vertiport and it is desirable that no protruding structures be formed on the rooftop for safety.

### [Disclosure]

### [Technical Problem]

It is one aspect of the present invention to provide an elevator system that supports safe and efficient takeoff and landing of aircraft.

It is another aspect of the present invention to provide an elevator system that can optimize space utilization for aircraft through optimal arrangement of an elevator car and a drive module.

It is a further aspect of the present invention to provide an elevator system that improves durability and stability of the elevator system through improvement of a rope system.

It is yet another aspect of the present invention to provide an elevator system that is installed by taking installation and maintenance efficiency in vertiports into account.

### [Technical Solution]

In accordance with one aspect of the present invention, an elevator system includes: an elevator car; a drive module including a drive motor providing driving force to lift or lower the elevator car, a rope moved by the drive motor, and a sheave part supporting the rope; a rope end part to which an end of the rope is coupled; and a counterweight supported by the rope, wherein the elevator car is connected to one side of the rope and the counterweight is connected to the other side of the rope to be supported thereby, a machine room receiving the rope end part and the drive motor therein is disposed below a rooftop, and the sheave part includes a car sheave coupled to the elevator car, the rope being supported on the car sheave.

In the elevator system, the sheave part may further include a drive sheave coupled to the drive motor and moving the rope to lift or lower the elevator car, and a counterweight sheave coupled to the counterweight, and the car sheave may be coupled to a lower portion of the elevator car.

In the elevator system, the car sheave may include a first car sheave disposed at one side of the elevator car and a second car sheave disposed at the other side of the elevator car, the rope extending from the drive sheave may be supported on the second car sheave, and the rope extending from the second car sheave may be supported on the first car sheave.

In the elevator system, the counterweight sheave may be disposed at a center of the counterweight and may include a first counterweight sheave and a second counterweight sheave, the first counterweight sheave and the second counterweight sheave being disposed at opposite sides of the center of the counterweight, respectively, and the rope may include a first rope supported on the first counterweight sheave and a second rope supported on the second counterweight sheave.

In the elevator system, the rope end part may include a counterweight-side rope end to which the rope supported on the counterweight sheave and extending therefrom is coupled and secured, and a car-side rope end to which the rope supported on the car sheave and extending therefrom is coupled and secured.

In the elevator system, the counterweight-side rope end may include a first counterweight-side rope end and a second counterweight-side rope end, the first counterweight-side rope end being disposed to face the first counterweight sheave and to which the first rope supported on the first counterweight sheave is secured, and the second counterweight-side rope end being disposed to face the second counterweight sheave and to which the second rope supported on the second counterweight sheave is secured.

In the elevator system, the first counterweight-side rope end may be disposed coaxial with a tangent line of the first counterweight sheave in an outward direction from the center of the counterweight, and the second counterweight-side rope end may be disposed coaxial with a tangent line of the second counterweight sheave in the outward direction from the center of the counterweight.

In the elevator system, the car-side rope end may be disposed coaxial with a tangent line of the first car sheave in an outward direction from a center of the elevator car, and a hoistway-side tangent line of the drive sheave may be coaxial with a tangent line of the second car sheave in the outward direction from the center of the elevator car.

In the elevator system, the elevator car may have a greater height than a distance from the rooftop to the drive sheave.

In the elevator system, the elevator car may be moved to a landing area, a hangar and a takeoff area of a vertiport, and the drive module and the rope end part may be disposed below the rooftop.

In accordance with another aspect of the present invention, an elevator system includes: an elevator car; a drive module including a drive motor providing driving force to lift or lower the elevator car, a rope moved by the drive motor, and a sheave part supporting the rope; a rope end part to which an end of the rope is coupled; and a counterweight supported by the rope, wherein the elevator car is connected to one side of the rope and the counterweight is connected to the other side of the rope to be supported thereby, a machine room receiving the rope end part and the drive motor therein is disposed below a rooftop, and the sheave part includes a plurality of drive sheaves coupled to the drive motor and spaced apart from each other, and a car sheave coupled to the elevator car, the rope being supported on the car sheave.

In the elevator system, the plurality of drive sheaves may include a first drive sheave and a second drive sheave, and the drive module may further include a reducer coupled to the drive motor, a first rotational shaft interlockably coupled to one side of the reducer and connected to the first drive sheave, and a second rotational shaft interlockably coupled to the other side of the reducer and connected to the second drive sheave.

In the elevator system, the plurality of drive sheaves may include a first drive sheave and a second drive sheave, and the drive module may further include a first rotational shaft and a second rotational shaft rotatably coupled to opposite sides of the drive motor, respectively, a first reducer interlockably coupled to the first rotational shaft, and a second reducer interlockably coupled to the second rotational shaft, the first drive sheave may be interlockably connected to the first reducer, and the second drive sheave may be interlockably connected to the second reducer.

In the elevator system, the sheave part may further include a plurality of counterweight sheaves spaced apart from each other and coupled to the counterweight, and the car sheave may be coupled to a lower portion of the elevator car.

In the elevator system, the car sheave may include a first car sheave disposed at one side of the elevator car and a second car sheave disposed at the other side of the elevator car, the rope extending from the drive sheave may be supported on the second car sheave, and the rope extending from the second car sheave may be supported on the first car sheave.

In the elevator system, the first car sheave may include a front first car sheave and a rear first car sheave, and the second car sheave may include a front second car sheave disposed to face the first drive sheave and a rear second car sheave disposed to face the second drive sheave.

In the elevator system, the counterweight sheaves may be disposed at opposite sides of the counterweight to be spaced apart from each other and may include a first counterweight sheave and a second counterweight sheave disposed at opposite side edges relative to a center of the counterweight, respectively, and the rope may include a first rope supported on the first counterweight sheave and a second rope supported on the second counterweight sheave.

In the elevator system, the rope end part may include a counterweight-side rope end to which the rope supported on the counterweight sheave and extending therefrom is coupled and secured, and a car-side rope end to which the rope supported on the car sheave and extending therefrom is coupled and secured.

In the elevator system, the counterweight-side rope end may include a first counterweight-side rope end and a second counterweight-side rope end, the first counterweight-side rope end being disposed to face the first counterweight sheave and to which the first rope supported on the first counterweight sheave is secured, and the second counterweight-side rope end being disposed to face the second counterweight sheave and to which the second rope supported on the second counterweight sheave is secured.

In the elevator system, the first counterweight-side rope end may be disposed coaxial with a tangent line of the first counterweight sheave toward a center of the counterweight in an outward direction thereof, and the second counterweight-side rope end may be disposed coaxial with a tangent line of the second counterweight sheave toward the center of the counterweight in the outward direction thereof.

In the elevator system, the first drive sheave may be disposed to face the first counterweight sheave, the second drive sheave may be disposed to face the second counterweight sheave, the first rope supported on the first drive sheave may be supported on the first counterweight sheave, and the second rope supported on the second drive sheave may be supported on the second counterweight sheave.

In the elevator system, the car-side rope end may be disposed coaxial with a tangent line of the first car sheave in an outward direction from a center of the elevator car, and a hoistway-side tangent line of the drive sheave may be coaxial with a tangent line of the second car sheave in the outward direction from the center of the elevator car.

In the elevator system, the elevator car may have a greater height than a distance from the rooftop to the drive sheave.

In the elevator system, the elevator car may be moved to a landing area, a hangar, and a takeoff area of a vertiport, and the drive module and the rope end part may be disposed below the rooftop.

### [Advantageous Effects]

According to the present invention, no protruding structure is formed on the rooftop, thereby ensuring stability during takeoff and landing of aircraft while securing space efficiency.

According to the present invention, it is possible to secure safe transportation of heavy aircraft.

According to the present invention, an elevator system can be easily installed through integrated configuration of a drive motor and a drive sheave, thereby improving productivity while simplifying maintenance.

### [Description of Drawings]

FIG. 1 is a first configuration view schematically illustrating an elevator system according to a first embodiment of the present invention.
FIG. 2 is a second configuration view schematically illustrating the elevator system according to the first embodiment of the present invention.
FIG. 3 is a third configuration view schematically illustrating the elevator system according to the first embodiment of the present invention.
FIG. 4 is a schematic first operational diagram of the elevator system according to the first embodiment of the present invention.
FIG. 5 is a schematic second operational diagram of the elevator system according to the first embodiment of the present invention.
FIG. 6 is a schematic configuration view of an embodiment of the elevator system according to the first embodiment of the present invention applied to a vertiport.
FIG. 7 is a first configuration view schematically illustrating an elevator system according to a second embodiment of the present invention.
FIG. 8 is a second configuration view schematically illustrating the elevator system according to the second embodiment of the present invention.
FIG. 9 is a third configuration view schematically illustrating the elevator system according to the second embodiment of the present invention.
FIG. 10 is schematic views of embodiments of a drive unit in the elevator system shown in FIG. 7.
FIG. 11 is a schematic first operational diagram of the elevator system according to the second embodiment of the present invention.
FIG. 12 is a schematic second operational diagram of the elevator system according to the second embodiment of the present invention.
FIG. 13 is a schematic configuration view of an embodiment of the elevator system according to the second embodiment of the present invention applied to a vertiport.

### [Best Mode]

Hereinafter, exemplary embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed (hardware wise) to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

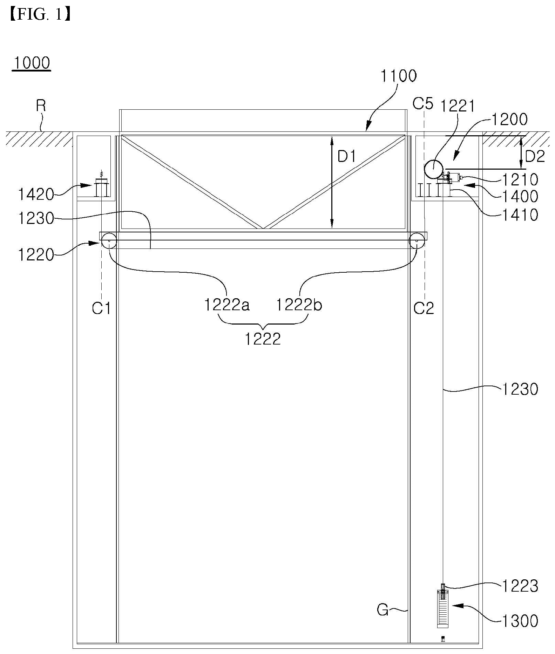

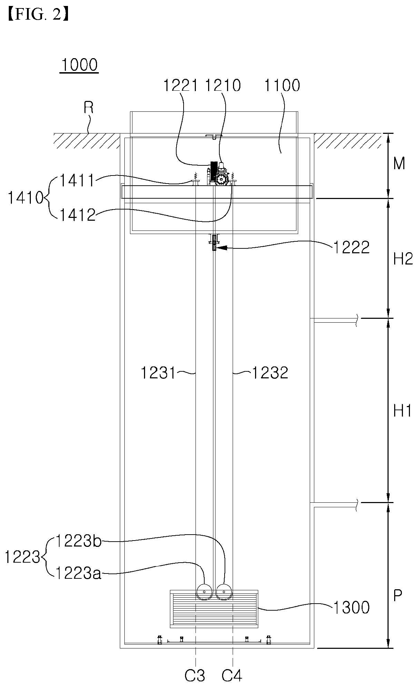

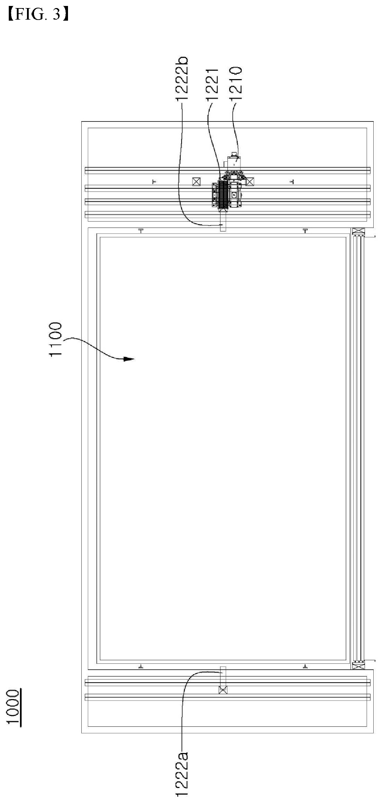

FIG. 1 is a first configuration view schematically illustrating an elevator system according to a first embodiment of the present invention, FIG. 2 is a second configuration view schematically illustrating the elevator system according to the first embodiment of the present invention, and FIG. 3 is a third configuration view schematically illustrating the elevator system according to the first embodiment of the present invention.

FIG. 1 is a front view, FIG. 2 is a side view, and FIG. 3 is a top view.

As shown in the drawings, an elevator system 1000 includes an elevator car 1100, a drive module 1200, a counterweight 1300, and a rope end part 1400.

More specifically, in the elevator system 1000, the drive module 1200 and the rope end part 1400 are received in a machine room, which is disposed below a rooftop so as not to protrude to an upper side of an elevator structure.

The machine room receiving the drive module 1200 and the rope end part 1400 therein may be disposed at either side of an upper portion of a hoistway.

The drive module 1200, the counterweight 1300, and the rope end part 1400 may be disposed at either side of the hoistway along which the elevator car 1100 moves.

The drive module 1200 lifts or lowers the elevator car 1100 and includes a drive motor 1210, a sheave part 1220, and a rope 1230.

The drive motor 1210 provides driving force to lift or lower the elevator car 1100.

The sheave part 1220 supports the rope 1230 and moves the rope 1230 to lift or lower the elevator car 1100.

The sheave part 1220 includes a drive sheave 1221, a car sheave 1222, and a counterweight sheave 1223.

The drive sheave 1221 is coupled to the drive motor 1210. The rope 1230 is supported on the drive sheave 1221. That is, the drive motor 1210 rotates the drive sheave 1221 to move the rope 1230 toward a counterweight-side rope end 1410 or a car-side rope end 1420 so as to lift or lower the elevator car 1100.

The drive sheave 1221 may include a plurality of sheaves.

The car sheave 1222 is mounted on the elevator car 1100 and support the rope 1230, which is supported on the drive sheave 1221 and extends therefrom to one side.

The car sheave 1222 may be mounted on a central lower end of the elevator car 1100.

The car sheave 1222 may include a first car sheave 1222a and a second car sheave 1222b.

The first car sheave 1222a may be disposed at one side of the elevator car 1100 and the second car sheave 1222b may be disposed at the other side of the elevator car 1100.

The first car sheave 1222a may be mounted on an outer surface of the elevator car 1100 at one side thereof, and the second car sheave 1222b may be mounted on the outer surface of the elevator car 1100 at the other side thereof.

A portion of the rope extending from the drive sheave 1221 is supported on the second car sheave 1222b and a portion of the rope extending from the second car sheave 1222b is supported on the first car sheave 1222a.

The counterweight sheave 1223 is coupled to the counterweight 1300. The rope 1230 extending from the drive sheave 1221 to the counterweight sheave 1223 is supported at one side thereof on the drive sheave 1221 and is supported at the other side thereof on the counterweight sheave 1223.

The counterweight sheave 1223 may be disposed at a center of the counterweight 1300.

The counterweight sheave 1223 includes a first counterweight sheave 1223a and a second counterweight sheave 1223b.

The first counterweight sheave 1223a and the second counterweight sheave 1223b may be disposed at opposite sides of the center of the counterweight 1300, respectively.

In addition, the rope supported on some sheaves of the plurality of sheaves in the drive sheave 1221 may be supported on the first counterweight sheave 1223a, and the rope supported on the remaining sheaves may be supported on the second counterweight sheave 1223b.

The drive motor 1210 may be realized as a sheave-integrated drive unit to which the drive sheave 1221 is coupled.

In a moving direction of the rope 1230, the elevator car 1100 may be placed at one side of the drive sheave 1221 coupled to the drive motor 1210 and the counterweight 1300 may be placed at the other side thereof.

The rope end part 1400 includes a counterweight-side rope end 1410 and a car-side rope end 1420.

A portion of the rope 1230 supported on the counterweight sheave 1223 and extending therefrom is coupled and secured to the counterweight-side rope end 1410.

The counterweight-side rope end 1410 includes a first counterweight-side rope end 1411 and a second counterweight-side rope end 1412.

The first counterweight-side rope end 1411 may be disposed to face the first counterweight sheave 1223a and the second counterweight-side rope end 1412 may be disposed to face the second counterweight sheave 1223b.

The first counterweight-side rope end 1411 may be disposed coaxial with a tangent line C3 of the first counterweight sheave 1223a in an outward direction from the center of the counterweight 1300, and the second counterweight-side rope end 1412 may be disposed coaxial with a tangent line C4 of the second counterweight sheave 1223b in the outward direction from the center of the counterweight 1300.

In addition, the car-side rope end 1420 may be disposed at one side of the hoistway and the counterweight-side rope end 1410 may be disposed at the other side of the hoistway.

A portion of the rope supported on the car sheave 1222 and extending therefrom is coupled and secured to the car-side rope end 1420.

The car-side rope end 1420 may be disposed coaxial with a tangent line C1 of the first car sheave 1222a in an outward direction from a center of the elevator car 1100, and a hoistway-side tangent line C5 of the drive sheave 1221 may be disposed coaxial with a tangent line C2 of the second car sheave 1222b in the outward direction from the center of the elevator car 1100.

The rope 1230 includes a first rope 1231 and a second rope 1232.

The first rope 1231 is coupled and secured to the first counterweight-side rope end 1411 and the second rope 1232 is coupled and secured to the second counterweight-side rope end 1412.

The first rope 1231 is supported on the first counterweight sheave 1223a and the second rope 1232 is supported on the second counterweight sheave 1223b.

That is, the first rope 1231 extending from the first counterweight-side rope end 1411 may be supported on the first counterweight sheave 1223a from an outer periphery of the counterweight 1300 toward the center thereof, and the second rope 1232 extending from the second counterweight-side rope end 1412 may be supported on the second counterweight sheave 1223b from the outer periphery of the counterweight 1300 toward the center thereof.

The first rope 1231 and the second rope 1232, supported on the first counterweight sheave 1223a and the second counterweight sheave 1223b, respectively, are supported on the drive sheave 1221, supported on the second car sheave 1222b and the first car sheave 1222a, respectively, and then are secured to the car-side rope end 1420.

The drive sheave 1221 and the car-side rope end 1420 may be disposed so as to face the center of the elevator car 1100 when the elevator car 1100 is lifted to the rooftop so as to be placed on one surface thereof.

This structure is conceived to allow the elevator car 1100 to be lifted or lowered while remaining as stable as possible.

The elevator car 1100 may be configured to receive aircraft and may have a certain size or more so as to be stably lifted or lowered.

The elevator car 1100 may have a greater height D1 than a distance D2 from the rooftop to the drive sheave 1221.

Accordingly, the elevator car 1100 can be stably lifted even when lifted toward the rooftop.

The height D1 of the elevator car 1100 may be set to be twice as large as the distance D2 between the rooftop and the drive sheave.

The elevator system may further include a stopper and a positioning sensor to stop the elevator car 1100 at a fixed position on the rooftop.

The hoistway may be provided with guide rails G configured to guide movement of the elevator car 1100 and guide shoes (not shown) corresponding to the guide rails G may be coupled to the elevator car 1100.

In order to guide stable movement of the elevator car 1100, a pair of guide rails may be provided to each side of the hoistway and a pair of guide shoes corresponding thereto may be coupled to each side of the elevator car 1100.

The elevator system according to the present invention may be applied not only to urban air mobility but also to elevators for other aircraft capable of vertical takeoff and landing.

The air mobility elevator system 1000 according to one embodiment has the structure as described above, in which the elevator car 1100 moves along the hoistway facing a pit P, hangars H1, H2, and the machine room M, and may be placed on one surface of the rooftop R, which corresponds to a takeoff and landing area, when lifted to the rooftop.

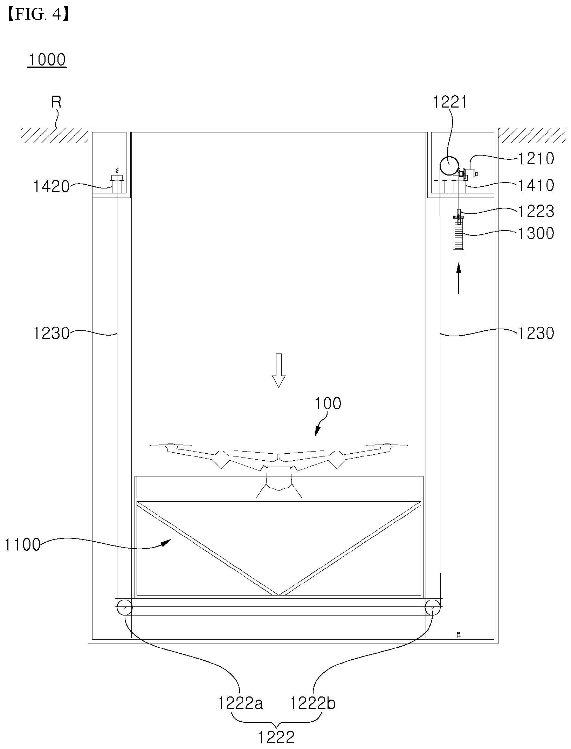

FIG. 4 is a schematic first operational diagram of the elevator system according to the first embodiment of the present invention.

Referring to FIG. 4, with an air mobility aircraft 100 loaded in the elevator car 1100 of the air mobility elevator system 1000, the elevator car 1100 is lowered to a lower portion of the hoistway.

More specifically, the rope 1230 is sequentially supported on the car sheave 1222, the drive sheave 1221, and the counterweight sheave 1223, with one end of the rope 1230 coupled to the car-side rope end 1420 and the other end of the rope 1230 coupled to the counterweight-side rope end 1410.

That is, when the drive motor 1210 rotates the drive sheave 1221 toward one side, the rope 1230 is provided toward the car-side rope end 1420 and the elevator car 1100 is moved to a lower portion of the hoistway, with the rope 1230 supported on the car sheave 1222.

In addition, as the rope 1230 is moved toward the car sheave 1222, the counterweight 1300 coupled to the counterweight sheave 1223 is moved toward an upper portion of the hoistway.

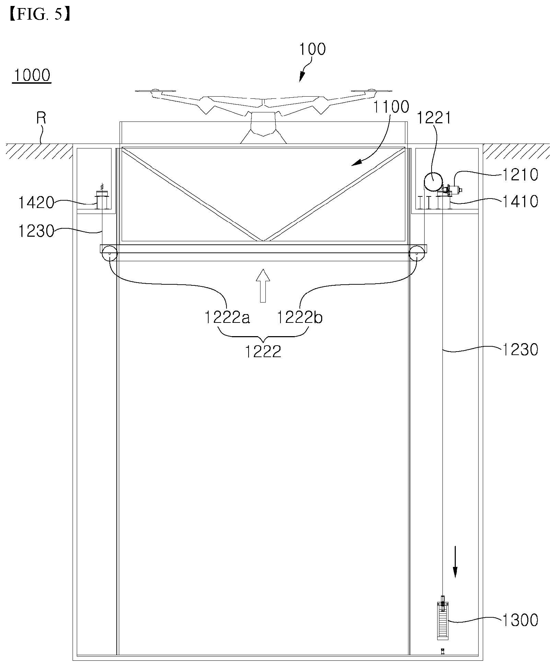

FIG. 5 is a schematic second operational diagram of the elevator system according to the first embodiment of the present invention.

Referring to FIG. 5, with an air mobility aircraft 100 loaded in the elevator car 1100 of the air mobility elevator system 1000, the elevator car 1100 is lifted to the top of the hoistway.

When the drive motor 1210 rotates the drive sheave 1221 toward the other side, the rope 1230 is provided toward the counterweight-side rope end 1410 and the elevator car 1100 is moved to the top of the hoistway, with the rope 1230 supported on the car sheave 1222.

In addition, as the rope 1230 is moved toward the counterweight-side rope end 1410, the counterweight 1300 coupled to the counterweight sheave 1223 is moved toward a lower portion of the hoistway.

Furthermore, the elevator car 1100 may be placed coplanar with the rooftop R.

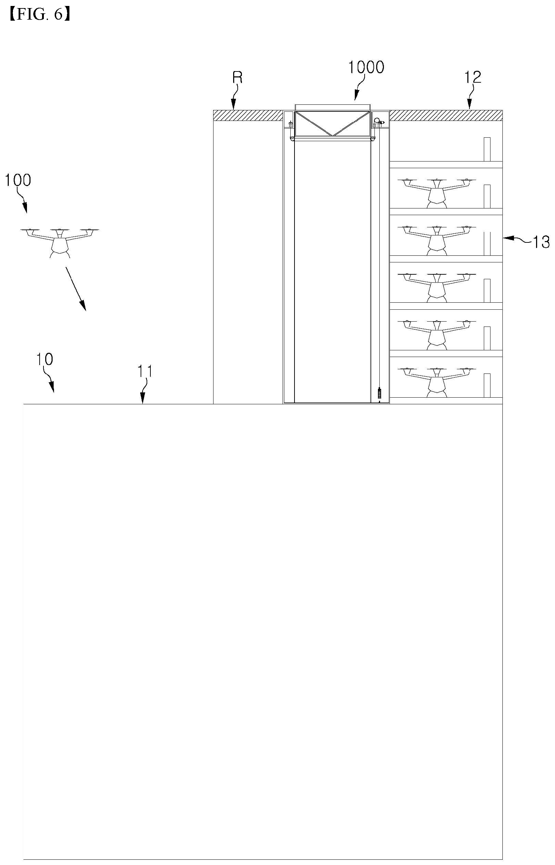

FIG. 6 is a schematic configuration view of an embodiment of the elevator system according to the first embodiment of the present invention applied to a vertiport.

As shown in the drawings, the elevator system may be applied to a vertiport, which is a vertical takeoff and landing airfield for aircraft.

The vertiport may include a takeoff area, a landing area, and a hangar.

The vertiport 10 may be constructed on the rooftop of a building.

In addition, the hangar of the vertiport may be composed of multiple stories, and each of the takeoff area and the landing area may be selectively located on the rooftop of the building or on the rooftop of the hangar.

The air mobility aircraft 100 may be moved to the landing area 12, the hangar 13, and the takeoff area 11 by the elevator system 1000, and may be parked in the hangar P.

The elevator car 1100 of the elevator system 1000 may be moved to the rooftop R of the vertiport 10, which is an upper end of the vertiport, and the drive module 1200 (see FIG. 5) does not protrude from the rooftop R, thereby ensuring stability.

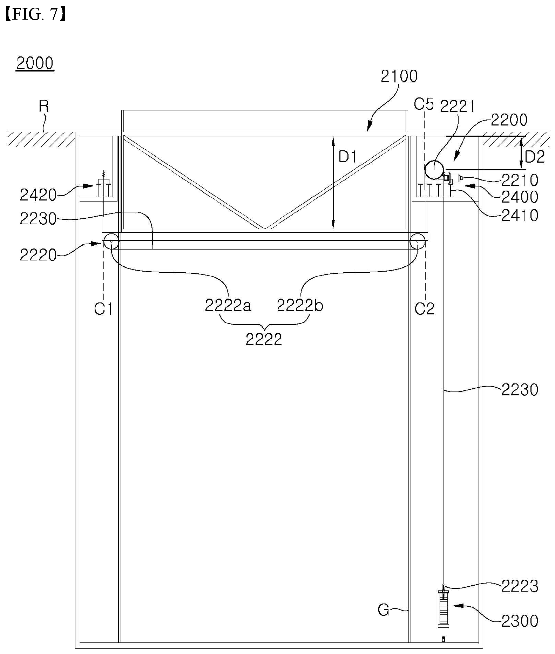

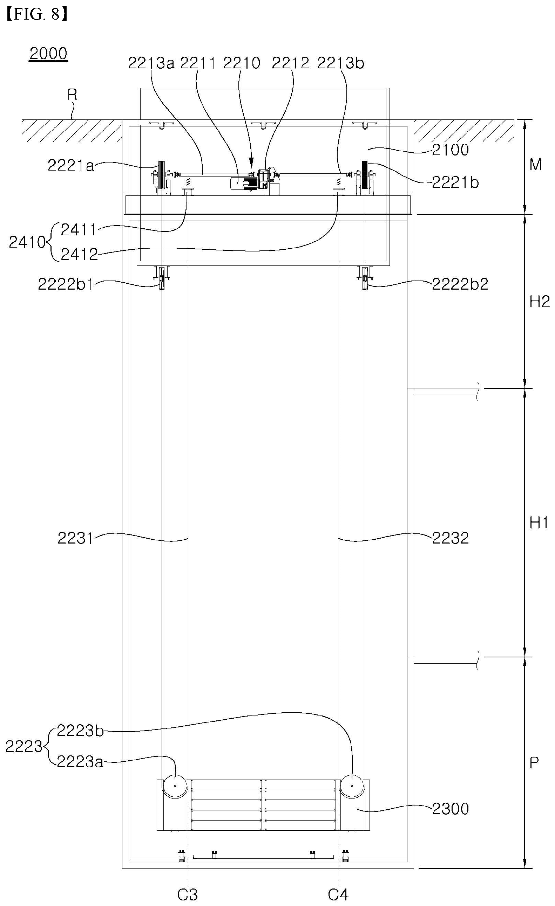

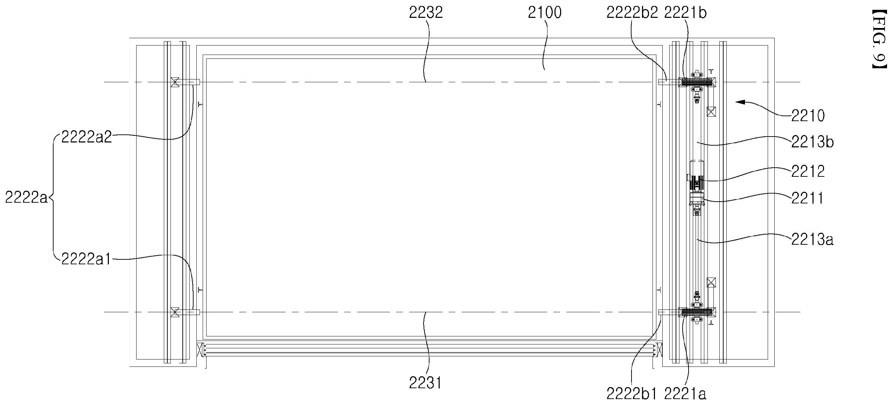

FIG. 7 is a first configuration view schematically illustrating an elevator system according to a second embodiment of the present invention, FIG. 8 is a second configuration view schematically illustrating the elevator system according to the second embodiment of the present invention, and FIG. 9 is a third configuration view schematically illustrating the elevator system according to the second embodiment of the present invention.

FIG. 7 is a front view, FIG. 8 is a side view, and FIG. 9 is a top view.

As shown in the drawings, an elevator system 2000 includes an elevator car 2100, a drive module 2200, a counterweight 2300, and a rope end part 2400.

More specifically, in the elevator system 2000, the drive module 2200 and the rope end part 2400 are received in a machine room, which does not protrude to an upper side of the elevator structure and is disposed at an upper portion of a hoistway.

The drive module 2200, the counterweight 2300, and the rope end part 2400 may be disposed at either side of the hoistway along which the elevator car 2100 moves.

The drive module 2200 provides driving force to lift or lower the elevator car 2100.

The drive module 2200 includes a drive unit 2210, a sheave part 2220, and a rope 2230.

The drive unit 2210 provides driving force to lift or lower the elevator car 2100.

The drive unit 2210 includes a drive motor 2211, a reducer 2212, and a rotational shaft 2213.

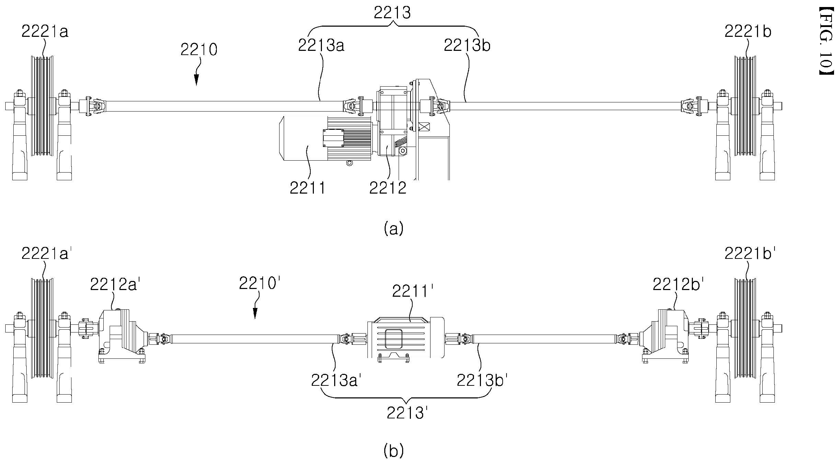

The reducer 2212 and the rotational shaft 2213 are directly or indirectly connected to the drive motor 2211 and transmit power to the drive sheave 2221. A systematic coupling structure of the drive unit 2210 will be described in more detail with reference to FIG. 10.

The sheave part 2220 moves the rope 2230 to lift or lower the elevator car 2100 while supporting the rope 2230.

The sheave part 2220 includes a drive sheave 2221, a car sheave 2222, and a counterweight sheave 2223.

The drive sheave 2221 is coupled to the drive unit 2210. The rope 2230 is supported on the drive sheave 2221. That is, the drive unit 2210 rotates the drive sheave 2221 to move the rope 2230 toward the counterweight-side rope end 2410 or the car-side rope end 2420 so as to lift or lower the elevator car 2100.

The drive sheave 2221 includes a first drive sheave 2221a and a second drive sheave 2221b.

The car sheave 2222 is mounted on the elevator car 2100 and support the rope 2230, which is supported on the drive sheave 2221 and extends therefrom to one side.

The car sheave 2222 may be mounted on a lower end of the elevator car 2100.

The car sheave 2222 may include a first car sheave 2222a and a second car sheave 2222b.

The first car sheave 2222a may be disposed at one side of the elevator car 2100 and the second car sheave 2222b may be disposed at the other side of the elevator car 2100.

The first car sheave 2222a may be mounted on an outer surface of the elevator car 2100 at one side thereof, and the second car sheave 2222b may be mounted on the outer surface of the elevator car 2100 at the other side thereof.

A portion of the rope extending from the drive sheave 2221 is supported on the second car sheave 2222b and a portion of the rope extending from the second car sheave 2222b is supported on the first car sheave 1222a.

In addition, each of the first car sheave 2222a and the second car sheave 2222b may include a plurality of a car sheave. In one example, the first car sheave 2222a may include a front first car sheave 2222a1 and a rear first car sheave 2222a2.

The second car sheave 2222b may include a front second car sheave 2222b1 and a rear second car sheave 2222b2.

The front second car sheave 2222b1 may be disposed to face the first drive sheave 2221a and the rear second car sheave 2222b2 may be disposed to face the second drive sheave 2221b.

The counterweight sheave 2223 is coupled to the counterweight 2300. The rope 2230 extending from the drive sheave 2221 to the counterweight sheave 2223 is supported at one side thereof on the drive sheave 2221 and is supported at the other side on the counterweight sheave 2223.

The counterweight sheave 2223 includes a first counterweight sheave 2223a and a second counterweight sheave 2223b.

The first counterweight sheave 2223a and the second counterweight sheave 2223b may be disposed at opposite side edges relative to a center of the counterweight 2300.

The first counterweight sheave 2223a may be disposed to face the first drive sheave 2221a, and the second counterweight sheave 2223b may be disposed to face the second drive sheave 2221b.

In a moving direction of the rope 2230, the elevator car 2100 may be placed at one side of the drive sheave 2221 coupled to the drive unit 2210 and the counterweight 2300 may be placed at the other side thereof.

The rope end part 2400 includes a counterweight-side rope end 2410 and a car-side rope end 2420.

A portion of the rope 2230 supported on the counterweight sheave 2223 and extending therefrom is coupled and secured to the counterweight-side rope end 2410.

The counterweight-side rope end 2410 includes a first counterweight-side rope end 2411 and a second counterweight-side rope end 2412.

The first counterweight-side rope end 2411 may be disposed to face the first counterweight sheave 2223a and the second counterweight-side rope end 2412 may be disposed to face the second counterweight sheave 2223b.

The first counterweight-side rope end 2411 may be disposed coaxial with a tangent line C3 of the first counterweight sheave 2223a toward the center of the counterweight 2300 in an outward direction thereof, and the second counterweight-side rope end 2412 may be disposed coaxial with a tangent line C4 of the second counterweight sheave 2223b toward the center of the counterweight 2300 in the outward direction thereof.

In addition, the car-side rope end 2420 may be disposed at one side of the hoistway and the counterweight-side rope end 2410 may be disposed at the other side of the hoistway.

A portion of the rope supported on the first car sheave 2222a and extending therefrom is coupled and secured to the car-side rope end 2420.

The car-side rope end 2420 may include a first car-side rope end and a second car-side rope end.

A portion of the rope supported on the front first car sheave 2222a1 and extending therefrom may be coupled and secured to the first car-side rope end and a portion of the rope supported on the rear first car sheave 2222a2 and extending therefrom may be coupled and secured to the second car-side rope end.

The first car-side rope end may be disposed to face the front first car sheave 2222a1 and the second car-side rope end may be disposed to face the rear first car sheave 2222a2.

The car-side rope end 2420 may be disposed coaxial with a tangent line C1 of the first car sheave 2222an in the outward direction from a center of the elevator car 2100, and a hoistway-side tangent line C5 of the drive sheave 2221 may be disposed coaxial with a tangent line C2 of the second car sheave 2222b in the outward direction from the center of the elevator car 2100.

The rope 2230 includes a first rope 2231 and a second rope 2232.

The first rope 2231 is coupled and secured to the first counterweight-side rope end 2411 and the second rope 2232 is coupled and secured to the second counterweight-side rope end 2412.

The first rope 2231 is supported on the first counterweight sheave 2223a and the second rope 2232 is supported on the second counterweight sheave 2223b.

That is, the first rope 2231 extending from the first counterweight-side rope end 2411 may be supported on the first counterweight sheave 2223an from the center of the counterweight 2300 in the outward direction, and the second rope 2232 extending from the second counterweight-side rope end 2412 may be supported on the second counterweight sheave 2223b from the center of the counterweight 2300 in the outward direction.

The first rope 2231 and the second rope 2232, supported on the first counterweight sheave 2223a and the second counterweight sheave 2223b, respectively, are supported on the first drive sheave 2221a and the second drive sheave 2221b, are supported on the second car sheave 2222b and the first car sheave 2222a, respectively, and then are secured to the car-side rope end 2420.

Here, the first rope 2231 supported on the first drive sheave 2221a is supported on the front second car sheave 2222b1 and the front first car sheave 2222a1, and the second rope 2232 supported on the second drive sheave 2221b is supported on the rear second car sheave 2222b2 and the rear first car sheave 2222a2.

The drive sheave 2221 and the car-side rope end 2420 may be disposed so as to face the center of the elevator car 2100 when the elevator car 2100 is lifted to the rooftop so as to be placed on one surface thereof.

This structure is conceived to allow the elevator car 2100 to be lifted or lowered while remaining as stable as possible.

The elevator car 2100 may be configured to receive an air mobility aircraft and may have a certain size or more so as to be stably lifted or lowered.

The elevator car 2100 may have a greater height D1 than a distance D2 from the rooftop to the drive sheave 2221

Accordingly, the elevator car 2100 can be stably lifted even when the elevator car 2100 is lifted toward the rooftop.

The height D1 of the elevator car 2100 may be set to be twice as large as the distance D2 between the rooftop and the drive sheave.

The elevator system may further include a stopper and a positioning sensor to stop the elevator car 2100 at a fixed position on the rooftop.

The hoistway may be provided with guide rails G configured to guide movement of the elevator car 2100 and guide shoes (not shown) corresponding to the guide rails G may be coupled to the elevator car 1100.

In order to guide stable movement of the elevator car 2100, a pair of guide rails may be provided to each side of the hoistway and a pair of guide shoes corresponding thereto may be coupled to each side of the elevator car 2100.

The air mobility elevator drive system 2000 according to the embodiment has the structure as described above, in which the elevator car 2100 moves along the hoistway facing a pit P, hangars H1, H2, and the machine room M, and may be placed on one surface of the rooftop R, which corresponds to a takeoff and landing area, when lifted to the rooftop.

The elevator system according to the present invention may be applied not only to urban air mobility but also to elevators for other aircraft capable of vertical takeoff and landing.

FIG. 10 is schematic views of embodiments of the drive unit in the elevator system shown in FIG. 7.

FIG. 10(a) shows a first embodiment of the drive unit 2210 that includes the drive motor 2211, the reducer 2212, and the rotational shaft 2213.

The reducer 2212 is coupled to the drive motor 2211.

The rotational shaft 2213 includes a first side rotational shaft 2213a and a second side rotational shaft 2213b.

The first rotational shaft 2213a is interlockably coupled to one side of the reducer 2212 and the second rotational shaft 2213b is interlockably coupled to the other side of the reducer 2212.

The first rotational shaft 2213a may be connected to the first drive sheave 2221a and the second rotational shaft 2213b may be connected to the second drive sheave 2221b.

Accordingly, the drive unit 2210 can stably transmit drive force to the first drive sheave 2221a and the second drive sheave 2221b, which are spaced apart from each other.

FIG. 10(b) shows a second embodiment of a drive unit 2210' that includes a drive motor 2211', reducers 2212a', 1212b', and a rotational shaft 2213'.

The rotational shaft 2213' includes a first side rotational shaft 2213a' and a second side rotational shaft 2213b'.

The first rotational shaft 2213a' and the second rotational shaft 2213b' are rotatably coupled to opposite sides of the drive motor 2211', respectively.

The reducers 2212a', 2212b' include a first reducer 2212a' and a second reducer 2212b'.

The first reducer 2212a' is interlockably coupled to the first rotational shaft 2213a' and the second reducer 2212b' is interlockably coupled to the second rotational shaft 2213b'.

The first drive sheave 2221a' is interlockably connected to the first reducer 2212a' and the second drive sheave 2221b' is interlockably connected to the second reducer 2212b'.

With the configuration as described above, the drive unit 2210 can transmit driving force to the first drive sheave 2221a and the second drive sheave 2221b, which are spaced apart from each other.

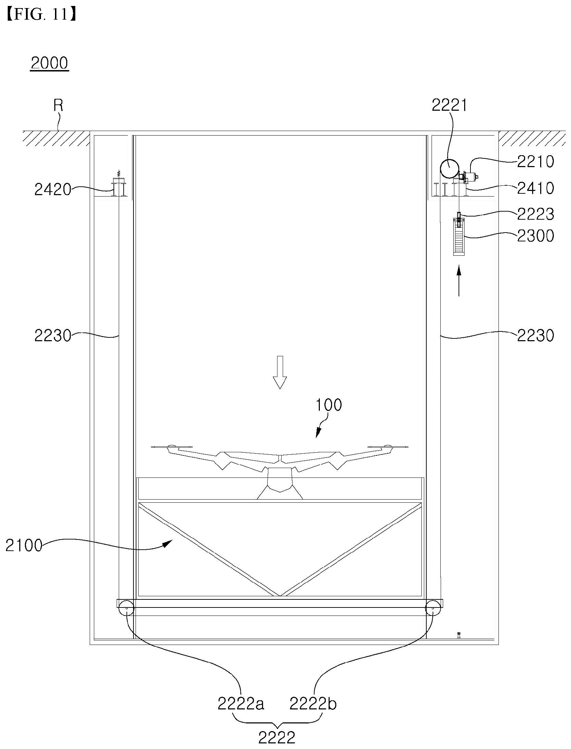

FIG. 11 is a schematic first operational diagram of the elevator system according to the second embodiment of the present invention.

Referring to FIG. 11, with an air mobility aircraft 100 loaded in the elevator car 2100 of the air mobility elevator system 2000, the elevator car 2100 is lowered to a lower portion of the hoistway.

More specifically, a rope 2230 is sequentially supported on the car sheave 2222, the drive sheave 2221, and the counterweight sheave 2223, with one end of the rope 2230 coupled to the car-side rope end 2420 and the other end of the rope 2230 coupled to the counterweight-side rope end 2410.

That is, when the drive motor 2211 rotates the drive sheave 2221 toward one side, the rope 2230 is provided toward the car-side rope end 2420 and the elevator car 2100 is moved to a lower portion of the hoistway, with the rope 2230 supported on the car sheave 2222.

In addition, as the rope 2230 is moved toward the car sheave 2222, the counterweight 2300 coupled to the counterweight sheave 2223 is moved toward an upper portion of the hoistway.

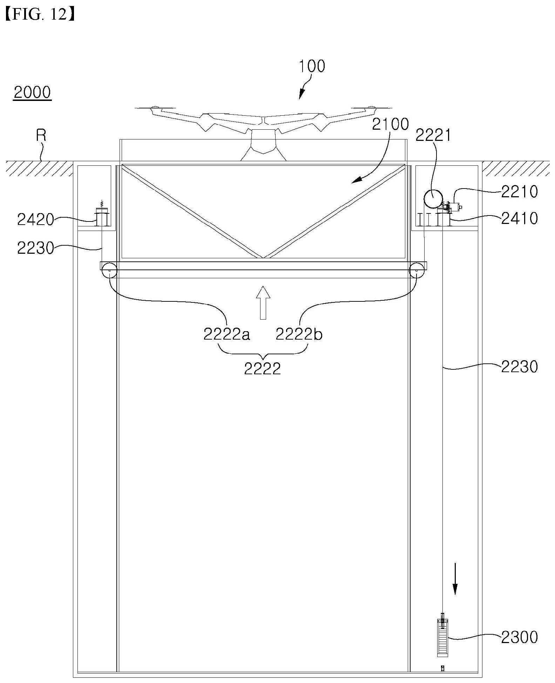

FIG. 12 is a schematic second operational diagram of the elevator system according to the second embodiment of the present invention.

Referring to FIG. 12, with an air mobility aircraft 100 loaded in the elevator car 2100 of the air mobility elevator system 2000, the elevator car 2100 is lifted to the top of the hoistway

When the drive motor 2211 rotates the drive sheave 2221 toward the other side, the rope 2230 is provided toward the counterweight-side rope end 2410 and the elevator car 2100 is moved to the top of the hoistway, with the rope 2230 supported on the car sheave 2222.

In addition, as the rope 2230 is moved toward the counterweight-side rope end 2410, the counterweight 2300 coupled to the counterweight sheave 2223 is moved toward a lower portion of the hoistway.

Furthermore, the elevator car 2100 may be placed coplanar with the rooftop R.

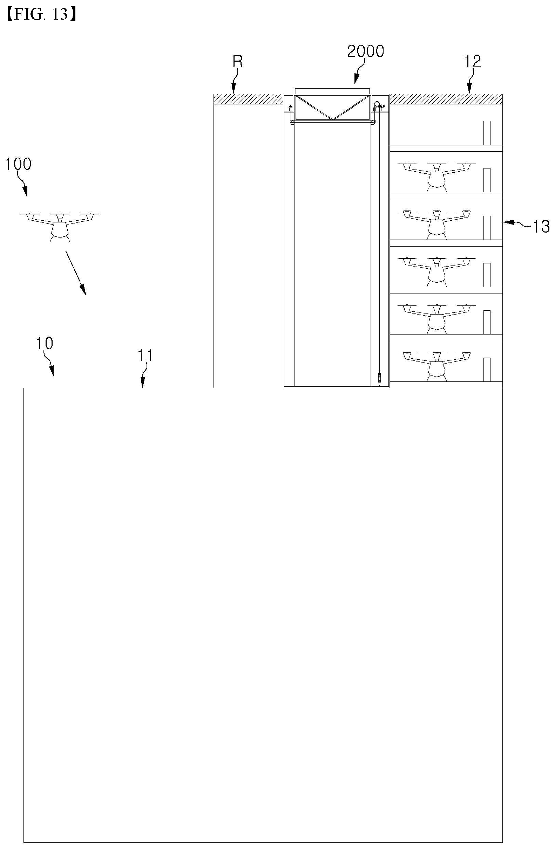

FIG. 13 is a schematic configuration view of an embodiment of the elevator system according to the second embodiment of the present invention applied to a vertiport.

As shown in the drawing, the vertiport system may be applied to a vertiport, which is a vertical takeoff and landing airfield for aircraft.

The vertiport may include a takeoff area, a landing area, and a hangar.

The vertiport 10 may be constructed on the rooftop of a building.

In addition, the hangar 13 of the vertiport 10 may be composed of multiple stories, and each of the takeoff area 11 and the landing area 12 may be selectively located on the rooftop of the building or on the rooftop of the hangar.

The air mobility aircraft 100 may be moved to the landing area 12, the hangar 13, and the takeoff area 11 by the elevator system 2000, and may be parked in the hangar P.

The elevator car 1100 of the elevator system 2000 may be moved to the rooftop R of the vertiport 10, which is an upper end of the vertiport, and the drive module 2200 (see FIG. 12) does not protrude from the rooftop R, thereby ensuring stability.

## Claims

1. An elevator system comprising:
an elevator car;
a drive module comprising a drive motor providing driving force to lift or lower the elevator car, a rope moved by the drive motor, and a sheave part supporting the rope;
a rope end part to which an end of the rope is coupled; and
a counterweight supported by the rope,
wherein the elevator car is connected to one side of the rope and the counterweight is connected to the other side of the rope to be supported thereby,
a machine room receiving the rope end part and the drive motor therein is disposed below a rooftop, and
the sheave part comprises a car sheave coupled to the elevator car,
the rope being supported on the car sheave.

2. The elevator system according to claim 1, wherein
the sheave part further comprises a drive sheave coupled to the drive motor and moving the rope to lift or lower the elevator car, and a counterweight sheave coupled to the counterweight, and
the car sheave is coupled to a lower portion of the elevator car.

3. The elevator system according to claim 2, wherein
the car sheave comprises a first car sheave disposed at one side of the elevator car and a second car sheave disposed at the other side of the elevator car,
the rope extending from the drive sheave is supported on the second car sheave, and
the rope extending from the second car sheave is supported on the first car sheave.

4. The elevator system according to claim 3, wherein the counterweight sheave is disposed at a center of the counterweight and comprises a first counterweight sheave and a second counterweight sheave,
the first counterweight sheave and the second counterweight sheave being disposed at opposite sides of the center of the counterweight, respectively, and
the rope comprises a first rope supported on the first counterweight sheave and a second rope supported on the second counterweight sheave.

5. The elevator system according to claim 4, wherein the rope end part comprises a counterweight-side rope end to which the rope supported on the counterweight sheave and extending therefrom is coupled and secured, and a car-side rope end to which the rope supported on the car sheave and extending therefrom is coupled and secured.

6. The elevator system according to claim 5, wherein the counterweight-side rope end comprises a first counterweight-side rope end and a second counterweight-side rope end,
the first counterweight-side rope end being disposed to face the first counterweight sheave and to which the first rope supported on the first counterweight sheave is secured, and
the second counterweight-side rope end being disposed to face the second counterweight sheave and to which the second rope supported on the second counterweight sheave is secured.

7. The elevator system according to claim 6, wherein the first counterweight-side rope end is disposed coaxial with a tangent line of the first counterweight sheave in an outward direction from the center of the counterweight, and the second counterweight-side rope end is disposed coaxial with a tangent line of the second counterweight sheave in the outward direction from the center of the counterweight.

8. The elevator system according to claim 5, wherein the car-side rope end is disposed coaxial with a tangent line of the first car sheave in an outward direction from a center of the elevator car, and a hoistway-side tangent line of the drive sheave is disposed coaxial with a tangent line of the second car sheave in the outward direction from the center of the elevator car.

9. The elevator system according to claim 2, wherein the elevator car has a greater height than a distance from the rooftop to the drive sheave.

10. The elevator system according to claim 1, wherein the elevator car is moved to a landing area, a hangar and a takeoff area of a vertiport, and the drive module and the rope end part are disposed below the rooftop.

11. An elevator system comprising:
an elevator car;
a drive module comprising a drive motor providing driving force to lift or lower the elevator car, a rope moved by the drive motor, and a sheave part supporting the rope;
a rope end part to which an end of the rope is coupled; and
a counterweight supported by the rope,
wherein the elevator car is connected to one side of the rope and the counterweight is connected to the other side of the rope to be supported thereby,
a machine room receiving the rope end part and the drive motor therein is disposed below a rooftop, and
the sheave part comprises a plurality of drive sheaves coupled to the drive motor and spaced apart from each other, and a car sheave coupled to the elevator car,
the rope being supported on the car sheave.

12. The elevator system according to claim 11, wherein
the plurality of drive sheaves comprises a first drive sheave and a second drive sheave, and
the drive module further comprises a reducer coupled to the drive motor, a first rotational shaft interlockably coupled to one side of the reducer and connected to the first drive sheave, and a second rotational shaft interlockably coupled to the other side of the reducer and connected to the second drive sheave.

13. The elevator system according to claim 11, wherein
the plurality of drive sheaves comprises a first drive sheave and a second drive sheave,
the drive module further comprises a first rotational shaft and a second rotational shaft rotatably coupled to opposite sides of the drive motor, respectively, a first reducer interlockably coupled to the first rotational shaft, and a second reducer interlockably coupled to the second rotational shaft,
the first drive sheave is interlockably connected to the first reducer, and
the second drive sheave is interlockably connected to the second reducer.

14. The elevator system according to claim 12 or 13, wherein
the sheave part further comprises a plurality of counterweight sheaves spaced apart from each other and coupled to the counterweight, and
the car sheave is coupled to a lower portion of the elevator car.

15. The elevator system according to claim 14, wherein
the car sheave comprises a first car sheave disposed at one side of the elevator car and a second car sheave disposed at the other side of the elevator car,
the rope extending from the drive sheave is supported on the second car sheave, and
the rope extending from the second car sheave is supported on the first car sheave.

16. The elevator system according to claim 15, wherein
the first car sheave comprises a front first car sheave and a rear first car sheave, and
the second car sheave comprises a front second car sheave disposed to face the first drive sheave and a rear second car sheave disposed to face the second drive sheave.

17. The elevator system according to claim 16, wherein
the counterweight sheaves are disposed at opposite sides of the counterweight to be spaced apart from each other and comprise a first counterweight sheave and a second counterweight sheave disposed at opposite side edges relative to a center of the counterweight, respectively, and
the rope comprises a first rope supported on the first counterweight sheave and a second rope supported on the second counterweight sheave.

18. The elevator system according to claim 17, wherein the rope end part comprises a counterweight-side rope end to which the rope supported on the counterweight sheave and extending therefrom is coupled and secured, and a car-side rope end to which the rope supported on the car sheave and extending therefrom is coupled and secured.

19. The elevator system according to claim 18, wherein the counterweight-side rope end comprises a first counterweight-side rope end and a second counterweight-side rope end,
the first counterweight-side rope end being disposed to face the first counterweight sheave and to which the first rope supported on the first counterweight sheave is secured,
the second counterweight-side rope end being disposed to face the second counterweight sheave and to which the second rope supported on the second counterweight sheave is secured.

20. The elevator system according to claim 19, wherein
the first counterweight-side rope end is disposed coaxial with a tangent line of the first counterweight sheave toward a center of the counterweight in an outward direction thereof, and
the second counterweight-side rope end is disposed coaxial with a tangent line of the second counterweight sheave toward the center of the counterweight in the outward direction thereof.

21. The elevator system according to claim 18, wherein
the first drive sheave is disposed to face the first counterweight sheave,
the second drive sheave is disposed to face the second counterweight sheave,
the first rope supported on the first drive sheave is supported on the first counterweight sheave, and
the second rope supported on the second drive sheave is supported on the second counterweight sheave.

22. The elevator system according to claim 18, wherein
the car-side rope end is disposed coaxial with a tangent line of the first car sheave in an outward direction from a center of the elevator car, and
a hoistway-side tangent line of the drive sheave is coaxial with a tangent line of the second car sheave in the outward direction from the center of the elevator car.

23. The elevator system according to claim 11, wherein the elevator car has a greater height than a distance from the rooftop to the drive sheave.

24. The elevator system according to claim 11, wherein the elevator car is moved to a landing area, a hangar, and a takeoff area of a vertiport, and the drive module and the rope end part are disposed below the rooftop.
